# EUROPÄISCHE PATENTANMELDUNG

(11) **EP 0 704 734 A2**
(43) Veröffentlichungstag der Anmeldung: **03.04.1996**
(21) Anmeldenummer: 95113735.5
(22) Anmeldetag: 01.09.1995
(51) Int. Cl.: G02B 6/44

(54) **Seekabel**

(30) Priorität: 28.09.1994 FR 4434618
(71) Anmelder: NORDDEUTSCHE SEEKABELWERKE AKTIENGESELLSCHAFT, D-26954 Nordenham (DE)
(72) Erfinder: Helle, Werner, Dr., D-26954 Nordenham (DE)
(74) Vertreter: Möller, Friedrich, Dipl.-Ing.

(57) **Zusammenfassung**

Bei bekannten optischen Seekabeln mit einem Meßleiter zur Fehlerortung ist derselbe häufig als längsnahtverschweißtes Rohr aus elektrisch leitendem Material ausgebildet. Derart ausgestaltete Seekabel weisen den Nachteil auf, daß sich dieselben nur mit hohem fertigungstechnischen Aufwand herstellen lassen.

Bei dem erfindungsgemäßen Kabel sind mindestens zwei Meßleiter untereinander isoliert in einer gemeinsamen Isolierschicht angeordnet. Ein derartiges Seekabel läßt sich mit geringem Aufwand und hoher Fertigungsgeschwindigkeit herstellen.

## Beschreibung

Die Erfindung betrifft ein Seekabel gemäß dem Oberbegriff des Anspruchs 1.

Die Erfindung ist in erster Linie auf Seekabel mit Lichtwellenleitern gerichtet. Seekabel sind während der Legung und im Betrieb, nämlich auf dem Meeresboden, erheblichen Belastungen ausgesetzt. Dabei besteht die Gefahr, daß die Seekabel infolge von Zug- und Druckbelastungen oder auch durch Fischbiß beschädigt werden. Zur Reparatur der Kabel ist es wichtig, den Ort und den Grad der Beschädigung des Kabels sowie den Verlauf desselben genau zu bestimmen. Darüber hinaus ist während des Betriebs das Seekabel auf Unversehrtheit durch ständige oder zeitweise Messungen zu überprüfen.

Zur Fehlerortung ist es üblich, im Seekabel einen Meßleiter zu integrieren. Bei einem bekannten Seekabel wird als Meßleiter ein längsnahtverschweißtes Rohr aus elektrisch leitendem Material verwendet, das um das Zentralelement aus Hüllrohr und Lichtwellenleitern angeordnet ist. Diese Konstruktion weist jedoch den Nachteil auf, daß das längsnahtverschweißte Rohr im Verbund mit in einem Hüllrohr integrierten Lichtwellenleitern einen hohen Fertigungsaufwand erfordert. Diese Ausgestaltung des Seekabels ist nicht nur unter fertigungstechnischen Gesichtspunkten ungünstig, sondern sie gewährleistet auch keine Längswasserdichtigkeit.

Der vorliegenden Erfindung liegt das Problem zugrunde, ein längswasserdichtes und fertigungstechnisch einfaches optisches Seekabel zu schaffen, das eine Überprüfung und auch die Bestimmung des Umfangs einer eventuellen Beschädigung zuläßt.

Zur Lösung dieses Problems weist das erfindungsgemäße Seekabel die Merkmale des Anspruchs 1 auf. Dadurch, daß mindestens zwei Meßleiter untereinander isoliert in mindestens einer Isolierung, insbesondere einer gemeinsamen Isolierschicht oder Isolierhülle, angeordnet sind, werden mehrere Vorteile erzielt. Zum einen ist das Seekabel mit einfachen fertigungstechnischen Maßnahmen herzustellen. Desweiteren gewährleistet das erfindungsgemäße Seekabel die Forderung der Längswasserdichtigkeit. Ferner kann durch die Anordnung mehrerer, untereinander isolierter Meßleiter auf einfache Weise eine Beschädigung des Seekabels ermittelt werden. Schließlich ermöglicht die erfindungsgemäße Ausgestaltung des Seekabels die Fehlerortung und/oder die Feststellung der Schwere einer Beschädigung.

Bei den Meßleitern handelt es sich um elektrische Leiter aus einem metallischen Material, beispielsweise Kupfer, Aluminium oder dergleichen.

Vorzugsweise sind die Meßleiter mit Abstand vom Lichtwellenleiter enthaltenden Hüllrohr angeordnet, derart, daß zwischen Hüllrohr und Meßleitern eine Isolierschicht angeordnet ist. Dies hat den Vorteil, daß störende elektrische Potentiale zwischen Hüllrohr und Meßleitern vermieden werden.

Bei einer vorteilhaften Weiterbildung des Seekabels sind die Meßleiter derart mit Abstand nebeneinander angeordnet, daß sie ohne sich zu berühren annähernd parallel zum Zentralelement verlaufen. Dadurch läßt sich das Seekabel einfach und wirtschaftlich herstellen.

Bei einer weiteren vorteilhaften Ausgestaltung des Seekabels ist es denkbar, die Meßleiter in einer äußeren Isolierschicht, nämlich in einem äußeren Randbereich des Seekabels, anzuordnen. Dies ermöglicht die Fehlerortung bereits bei geringfügiger Beschädigung des Seekabels an dessen Oberfläche.

Weiterbildungen der Erfindung ergeben sich aus den Unteransprüchen und der Beschreibung. Nachfolgend werden bevorzugte Ausführungsbeispiele der Erfindung anhand der Zeichnung näher erläutert. In der Zeichnung zeigen:
- Fig. 1: ein Seekabel im Querschnitt,
- Fig. 2: ein Seekabel nach einem zweiten Ausführungsbeispiel der Erfindung in einer Ansicht analog zu Fig. 1, und
- Fig. 3: ein Seekabel nach einem dritten Ausführungsbeispiel der Erfindung in einer Ansicht analog zu Fig. 1 und 2.

Die hier gezeigten Seekabel dienen der optischen Informationsübermittlung, der Übertragung elektrischer Energie sowie der Überwachung, der Fehlerortung und/oder der Feststellung der Schwere einer Beschädigung.

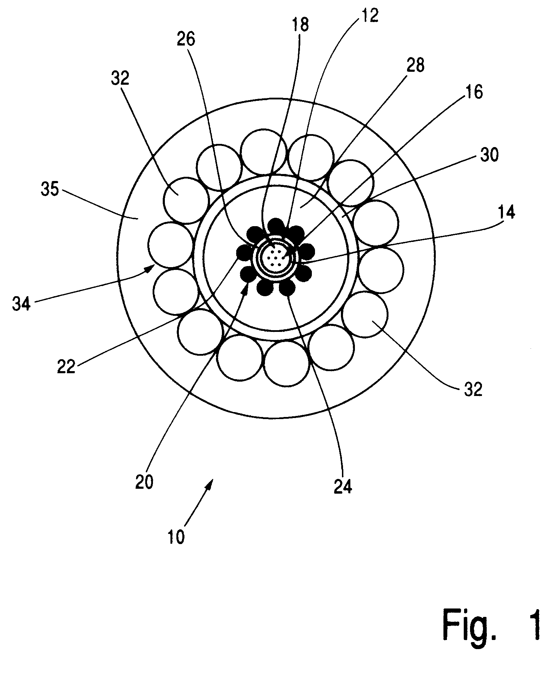

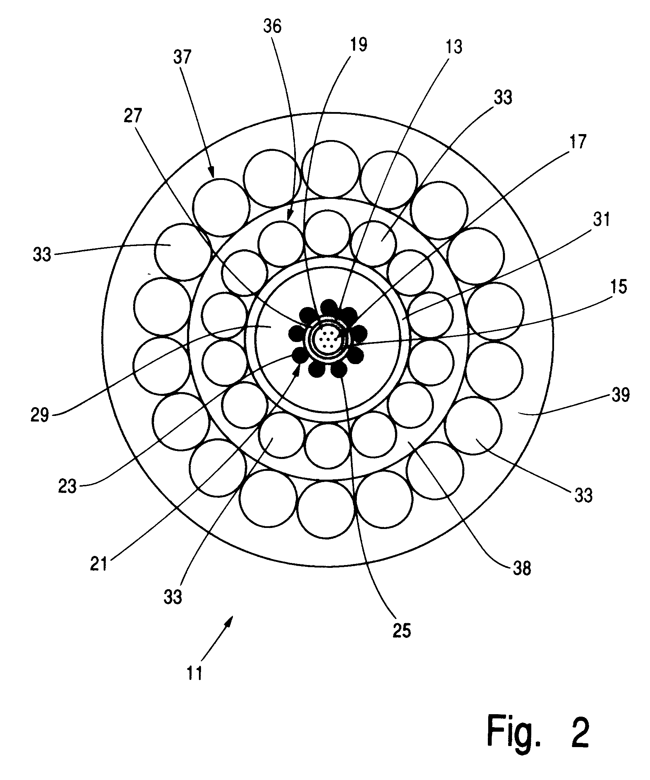

Die in den Fig. 1 und 2 dargestellten Seekabel 10, 11 weisen je ein Zentralelement 12, 13 auf, wobei das Zentralelement 12, 13 aus einem Hüllrohr 14, 15 und mindestens einem darin angeordneten Lichtwellenleiter 16, 17 besteht. Die Lichtwellenleiter 16, 17 sind gegebenenfalls mit Hilfe eines Füllmediums 18, 19, z.B. einem Gel, fest im Hüllrohr 14, 15 eingebettet. Es ist auch denkbar, daß die Lichtwellenleiter 16, 17 lose im Hüllrohr 14, 15 angeordnet sind. Darüber hinaus kann mindestens ein Hüllrohr mit einem oder mehreren Lichtwellenleitern auch außermittig im Seekabel angeordnet sein.

Um das Hüllrohr 14, 15 ist eine Lage 20, 21 aus einer Mehrzahl elektrischer Leiter 22, 23 angeordnet. Die elektrischen Leiter 22, 23 sind als Meßleiter 24, 25 zur Funktionskontrolle, Fehlererkennung und/oder Fehlerortung ausgebildet. Es ist jedoch auch denkbar, daß ein oder mehrere elektrischen Leiter 22, 23 der Übertragung elektrischer Energie dienen. Die elektrischen Leiter 22, 23 zur Bildung der Meßleiter 24, 25 bestehen aus einem metallischen Material, insbesondere Kupfer, Aluminium bzw. Kupfer und/oder Aluminium enthaltende Legierungen.

Die Leiter 22, 23 bzw. Meßleiter 24, 25 sind mit Abstand vom Hüllrohr 14, 15 des Zentralelements 12, 13 angeordnet, wobei zwischen Hüllrohr 14, 15 und Meßleitern 24, 25 eine erste Isolierschicht 26, 27 angeordnet ist. Durch die Isolierschicht 26, 27 werden die Leiter 22, 23 gegenüber dem Hüllrohr 14, 15 elektrisch isoliert. Dadurch wird das Auftreten störender elektrischer Potentiale zwischen Hüllrohr 14, 15 und Leitern 22, 23 vermieden.

Die Leiter 22, 23 bzw. Meßleiter 24, 25 sind von einer weiteren Isolierschicht 28, 29 umgeben. Dabei sind Meßleiter 24, 25 derart in der Isolierschicht 28, 29 angeordnet, daß die Meßleiter 24, 25 voneinander beabstandet und untereinander isoliert sind. Desweiteren verlaufen die Meßleiter 24, 25 annähernd parallel zum Zentralelement 12, 13 bzw. Hüllrohr 14, 15.

Die Isolierschichten 26, 27 einerseits und 28, 29 andererseits sind miteinander lückenlos verbunden, umgeben also zusammen die Meßleiter 24, 25 vollständig.

Die Isolierschichten 26, 27, 28, 29 bestehen vorzugsweise aus Polyäthylen. Es ist jedoch auch denkbar, daß die aufeinanderfolgenden Isolierschichten 26, 28 bzw. 27, 29 aus anderen Kunststoffen oder unterschiedlichen Materialien bestehen.

Angrenzend an die Isolierschicht 28, 29 ist eine Hüllschicht 30, 31 aus Polypropylen-Fäden angeordnet. Zusätzlich zu den Polypropylen-Fäden enthält die Hüllschicht 30, 31 Bitumenbestandteile. Anschließend an die Hüllschicht 30, 31 weist das Seekabel 10, 11 mindestens eine Lage aus zugaufnehmenden Strängen 32, 33 auf.

Bei dem Kabel 10 (Fig. 1) ist die Hüllschicht 30 lediglich von einer Lage 34 aus zugaufnehmenden Strängen 32 umgeben. Die zugaufnehmenden Stränge 32 sind dabei um das Zentralelement 12 bzw. die Hüllschicht 30 verseilt angeordnet. Desweiteren sind die zugaufnehmenden Stränge 32 der Lage 34 dicht nebeneinanderliegend angeordnet. Umgeben sind die zugaufnehmenden Stränge 32 des Seekabels 10 von einer Hüllschicht 35, die vorzugsweise aus Polypropylen-Fäden besteht.

Bei dem Seekabel 11 (Fig. 2) ist das Zentralelement 13 bzw. die Hüllschicht 31 von zwei Lagen 36, 37 aus zugaufnehmenden Strängen 33 umgeben. Jede Lage 36, 37 aus zugaufnehmenden Strängen 33 ist dabei in eine Hüllschicht 38, 39 eingebettet. Die Hüllschicht 38 der inneren Lage 36 besteht aus Polypropylen-Fäden mit Bitumenanteil. Die Hüllschicht 39 der äußeren Lage 37 hingegen besteht lediglich aus Polypropylen-Fäden. Die zugaufnehmenden Stränge 33 der Lagen 36, 37 sind um das Zentralelement 13 bzw. die Hüllschicht 31 verseilt angeordnet. Desweiteren sind die zugaufnehmenden Stränge 33 der Lagen 36, 37 dicht nebeneinanderliegend in den Hüllschichten 38, 39 angeordnet.

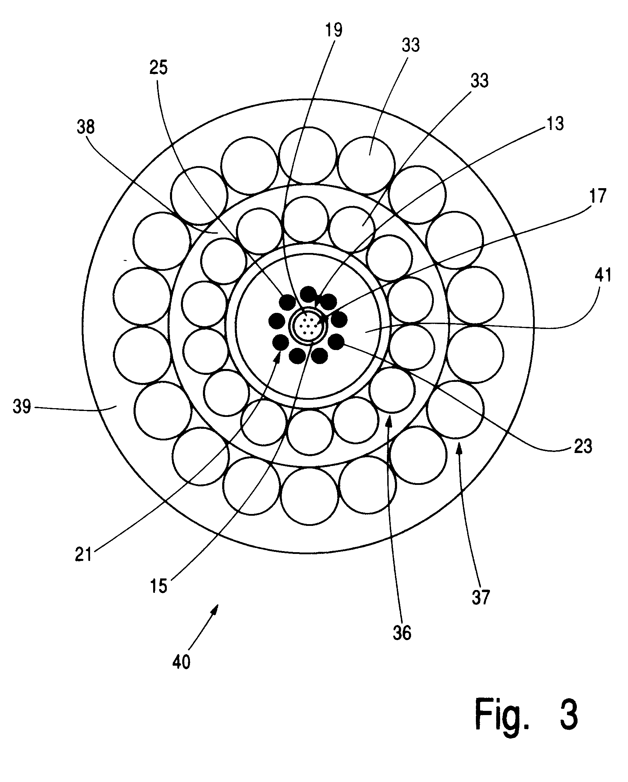

Fig. 3 zeigt ein Seekabel 40, das über einen zum Seekabel 11 gemäß Fig. 2 korrespondierenden Aufbau verfügt. Demzufolge werden für gleiche Bauteile gleiche Bezugsziffern verwendet. Im Unterschied zum Seekabel 11 gemäß Fig. 2 sind die Leiter 23 bzw. Meßleiter 25 in einer homogenen bzw. einlagigen Isolierschicht 41 angeordnet, also vollständig von einer einzigen Isolierung umgeben bzw. darin eingebettet. Die Meßleiter 25 sind dabei derart in der Isolierschicht 41 angeordnet, daß sie - wie im Ausführungsbeispiel der Fig. 2 - sowohl untereinander als auch zum Hüllrohr 15 des Zentralelements 13 und den zufaufnehmenden Strägen 33 der Lage 36 beabstandet sind. Damit sind die Meßleiter 25 sowohl untereinander isoliert als auch gegenüber dem Hüllrohr 15 und den zugaufnehmenden Strängen 33.

## Patentansprüche

1. Seekabel mit insbesondere einem Zentralelement aus einem Hüllrohr und mindestens einem darin angeordneten Lichtwellenleiter, mit mindestens einer Lage aus nebeneinander angeordneten, zugaufnehmenden Strängen und mit mindestens einem Meßleiter, **dadurch gekennzeichnet**, daß mindestens zwei Meßleiter (24, 25) untereinander isoliert in mindestens einer Isolierung angeordnet sind.

2. Seekabel nach Anspruch 1, dadurch gekennzeichnet, daß die Meßleiter (24, 25) in einer gemeinsamen Isolierung, insbesondere einer Isolierhülle oder Isolierschicht (28, 29, 41), angeordnet sind.

3. Seekabel nach Anspruch 2, dadurch gekennzeichnet, daß die gemeinsame Isolierung der Meßleiter (24, 25) mehrschichtig ausgebildet ist, insbesondere aus mehreren zusammenhängenden Isolierschichten (28, 29, 41) oder Isoierhüllen besteht.

4. Seekabel nach Anspruch 1, dadurch gekennzeichnet, daß die Meßleiter (24, 25) zwischen dem Hüllrohr (14, 15) des Zentralelements (12, 13) und einer ersten Lage (34, 36) aus zugaufnehmenden Strängen (32, 33) angeordnet sind.

5. Seekabel nach Anspruch 1, dadurch gekennzeichnet, daß die Meßleiter (24, 25) mit Abstand vom Hüllrohr (14, 15) angeordnet sind, derart, daß zwischen Hüllrohr (14, 15) und Meßleitern (24, 25) die Isolierung oder ein Teil derselben angeordnet ist.

6. Seekabel nach Anspruch 1, dadurch gekennzeichnet, daß die Meßleiter (24, 25) mit Abstand zueinander verlaufen, vorzugsweise parallel.

7. Seekabel nach Anspruch 1, dadurch gekennzeichnet, daß die Meßleiter (24, 25) derart nebeneinander angeordnet sind, daß dieselben annähernd parallel zum Zentralelement (12, 13) verlaufen.

8. Seekabel nach Anspruch 1, dadurch gekennzeichnet, daß die Meßleiter (24, 25) mit Abstand von den zugaufnehmenden Strängen (32, 33) angeordnet sind, derart, daß zwischen Meßleitern (24, 25) und Strängen (32, 33) die Isolierung oder ein Teil derselben angeordnet ist.

9. Seekabel nach Anspruch 1, dadurch gekennzeichnet, daß die zugaufnehmenden Stränge (32, 33) um das Zentralelement (12, 13) und die Meßleiter (24, 25) gewickelt, insbesondere verseilt, angeordnet sind.
